# EUROPEAN PATENT APPLICATION

(11) **EP 4 671 820 A1**
(43) Date of publication of application: **31.12.2025**
(21) Application number: 25184507.9
(22) Date of filing: 23.06.2025
(51) Int. Cl.: G01S 7/497, H04B 10/07

(54) **LIDAR CHIP AND LIDAR**

(30) Priority: 25.06.2024 CN 202410824936
(71) Applicant: Suteng Innovation Technology Co., Ltd, Shenzhen City Guangdong 518000 (CN)
(72) Inventor: LIAO, Yumin, Shenzhen City (CN); ZANG, Junling, Shenzhen City (CN); HUANG, Renfang, Shenzhen City (CN)
(74) Representative: Ran, Handong

(57) **Abstract**

A LiDAR chip and a LiDAR are provided. The LiDAR chip comprises a functional processing system and a safety management system. The functional processing system implements and detects first-part functions, and outputs first detection results, the functional processing system including a first data bus. The safety management system detects second-part functions to obtain second detection results, and when determining that the first-part functions and/or second-part functions exhibit anomalies, outputs anomaly signals to an external device based on at least part of the anomalous functions. The safety management system includes a decoupling module and a second data bus, the decoupling module performing decoupling between the first data bus and the second data bus, with the functional processing system and the safety management system having different power supplies and clocks.

## Description

### TECHNICAL FIELD

The present application relates to the field of radar technology, and more specifically, to a LiDAR chip and a LiDAR.

### BACKGROUND

In fields such as smart transportation/autonomous driving, rapidly and accurately perceiving the surrounding environment of roads/autonomous vehicles is a critical aspect. Based on road conditions, vehicle positions, and obstacle information obtained through sensor devices, road signal control is coordinated to improve road management quality and efficiency. Autonomous vehicle decisions are controlled to adjust safe distances between vehicles, ensuring safe and reliable operation on roads. As one of the most critical sensors for autonomous driving, LiDAR provides essential information such as the position, size, and motion data of traffic participants to decision-making systems, which is vital in these fields. Precisely because LiDAR serves as the "eyes" of autonomous vehicles, ensuring the security of LiDAR data acquisition and transmission becomes exceptionally important, as it directly impacts the safety of passengers and drivers in the vehicle.

### SUMMARY

Embodiments of the present application provide a LiDAR chip and a LiDAR. When anomalies occur in the LiDAR chip, anomaly signals can be uploaded to an external device with a higher probability to reduce safety risks, ensure stable operation of the external device, and effectively safeguard personal safety.

In a first aspect, an embodiment of the present application provides a LiDAR chip, comprising: a functional processing system, configured to implement and detect first-part functions, and output first detection results, wherein the functional processing system comprises a first data bus; and a safety management system, configured to detect second-part functions to obtain second detection results, acquire the first detection results and, when determining that the first-part functions and/or the second-part functions exhibit anomalies based on the first detection results and the second detection results, output anomaly signals to an external device based on at least part of the anomalous functions; wherein the safety management system comprises a decoupling module and a second data bus, the decoupling module being arranged between the first data bus and the second data bus to decouple the first data bus and the second data bus, and wherein the functional processing system and the safety management system operate using different power supplies and clocks.

In some embodiments, the safety management system comprises a function detection module, a safety management module, and a safety island; the function detection module is configured to detect the second-part functions and output the second detection results to the safety management module; the safety management module is configured to receive the first detection results and the second detection results, determine anomalous functions among the first-part functions and the second-part functions based on the first detection results and the second detection results, generate M interrupts respectively corresponding to the M anomalous functions, and output N of the M interrupts to the safety island, wherein M and N are integers, and M≥N≥1; and the safety island is configured to determine N anomalous functions corresponding to the N interrupts and output anomaly signals to the external device based on at least part of the anomalous functions among the N anomalous functions.

In some embodiments, the function detection module comprises: a clock detection unit configured to detect all clocks of the LiDAR chip; a power supply detection unit configured to detect all power supplies of the LiDAR chip; a memory detection unit configured to detect functions of all memories of the LiDAR chip; and a logic circuit detection unit configured to detect functions of all logic circuits of the LiDAR chip.

In some embodiments, the safety management module is further configured to: after the LiDAR chip is powered on, control the memory detection unit and the logic circuit detection unit to operate; if it is determined that all memories and logic circuits of the LiDAR chip exhibit no anomalies, control all circuits in the LiDAR chip to start normally; if it is determined that anomalies exist in the memories or logic circuits of the LiDAR chip, disable the startup of all circuits in the LiDAR chip.

In some embodiments, the safety management module is further configured to: after all circuits in the LiDAR chip have started normally, acquire the first detection results and the second detection results at preset intervals; and output corresponding interrupts to the safety island each time anomalies in the first-part functions and/or the second-part functions are determined based on the first detection results and the second detection results.

In some embodiments, the safety management module is further configured to: assign a priority level to each of the M interrupts and transmit N interrupts with the highest priority levels to the safety island.

In some embodiments, the functional processing system comprises: a laser transceiver control module, configured to emit laser beams to a target object and receive echo signals reflected by the target object; a laser test stimulus generation module, configured to generate laser test excitations and send them to the laser transceiver control module, causing the laser transceiver control module to operate in a test state; and a laser test result module, configured to acquire and output test results of the laser transceiver control module operating in the test state, wherein the first detection results include the test results of the laser transceiver control module operating in the test state.

In some embodiments, the functional processing system comprises: a point cloud processing module configured to process point cloud data, wherein the point cloud data is obtained from echo signals reflected by a target object after laser beams are emitted to the target object; a point cloud processing test stimulus generation module configured to generate point cloud processing test excitations and send them to the point cloud processing module, causing the point cloud processing module to operate in a test state; a point cloud processing test result module configured to acquire and output test results of the point cloud processing module operating in the test state, wherein the first detection results include the test results of the point cloud processing module operating in the test state.

In some embodiments, the functional processing system comprises: a bus detecting module configured to detect whether data transmission on the first data bus is anomalous; a bus error injection module configured to generate bus error information and inject the bus error information into the bus detecting module, wherein the bus error information is obtained by simulating anomalous data transmission on the first data bus; and a bus error injection result detection module configured to acquire and output detection results of the bus error information injected into the bus detecting module, wherein the first detection results include the detection results of the bus error information injected into the bus detecting module.

In some embodiments, the functional processing system comprises: a memory; a memory error injection module configured to generate memory error information and inject the memory error information into data stored on the memory; a verification and error correction module configured to perform verification and error correction when the memory error information is injected into the stored data, and transmit verification results and error correction results to the safety management system, wherein the first detection results comprise the verification results and the error correction results.

In a second aspect, an embodiment of the present application provides a LiDAR, comprising a housing and the LiDAR chip, wherein the LiDAR chip is arranged inside the housing; wherein the LiDAR chip, comprising: a functional processing system, configured to implement and detect first-part functions, and output first detection results, wherein the functional processing system comprises a first data bus; and a safety management system, configured to detect second-part functions to obtain second detection results, and configured to acquire the first detection results and, when determining that the first-part functions and/or the second-part functions exhibit anomalies based on the first detection results and the second detection results, output anomaly signals to the external device based on at least part of the anomalous functions; wherein the safety management system comprises a decoupling module and a second data bus, the decoupling module being arranged between the first data bus and the second data bus to decouple the first data bus and the second data bus, and wherein the functional processing system and the safety management system operate using different power supplies and clocks.

The LiDAR chip in the embodiments of the present application includes a functional processing system and a safety management system. The functional processing system is configured to implement and detect first-part functions and output first detection results, wherein the functional processing system includes a first data bus. The safety management system is configured to detect second-part functions to obtain second detection results, acquire the first detection results, and output anomaly signals to the external device based on at least part of the anomalous functions when anomalies in the first-part functions and/or the second-part functions are determined. The safety management system includes a decoupling module and a second data bus, with the decoupling module arranged between the first and second data buses to decouple them. Additionally, the functional processing system and the safety management system operate on different power supplies and clocks. This design ensures that, when anomalies occur in the LiDAR chip (i.e., anomalies in the first-part and/or second-part functions), the safety management system remains largely unaffected due to its independent power supply, clock, and decoupled data buses. Consequently, the safety management system can maintain normal operation with a higher probability, thereby uploading anomaly information to the external device more reliably. This reduces safety risks, ensures stable operation of the external device, and effectively safeguards personal safety

### BRIEF DESCRIPTION OF DRAWINGS

FIG. 1 is a structural schematic diagram of a LiDAR chip according to an embodiment of the present application;
FIG. 2 is a structural schematic diagram of the LiDAR chip according to an embodiment of the present application;
FIG. 3 is a structural schematic diagram of the LiDAR chip according to an embodiment of the present application;
FIG. 4 is a structural schematic diagram of the LiDAR chip according to an embodiment of the present application;
FIG. 5 is a structural schematic diagram of the LiDAR chip according to an embodiment of the present application;
FIG. 6 is a structural schematic diagram of the LiDAR chip according to an embodiment of the present application;
FIG. 7 is a structural schematic diagram of the LiDAR chip according to an embodiment of the present application;
FIG. 8 is a structural schematic diagram of the LiDAR chip according to an embodiment of the present application;
FIG. 9 is a structural schematic diagram of the LiDAR chip according to an embodiment of the present application;
FIG. 10 is a structural schematic diagram of the LiDAR chip according to an embodiment of the present application.

Reference signs: 1000, LiDAR chip; 100, functional processing system; 101, first data bus; 102, laser transceiver control module; 103, laser test stimulus generation module; 104, laser test result module; 1041, first CRC convolutional unit; 1042, laser test result output unit; 105, point cloud processing module; 106, point cloud processing test stimulus generation module; 107, point cloud processing test result module; 1071, second CRC convolutional unit; 1072, point cloud processing test result output unit; 108, bus detecting module; 109, bus error injection module; 110, bus error injection result detection module; 111, memory; 112, memory error injection module; 113, verification and correction module; 200, safety management; 201, decoupling module; 202, second data bus; 203, safety management module; 204, function detection module; 2041, clock detection unit; 2042, power supply detection unit; 2043, memory detection unit; 2044, logic circuit detection unit; 205, safety island; 206, interrupt handling module; 2000, external device.

### DETAILED DESCRIPTION

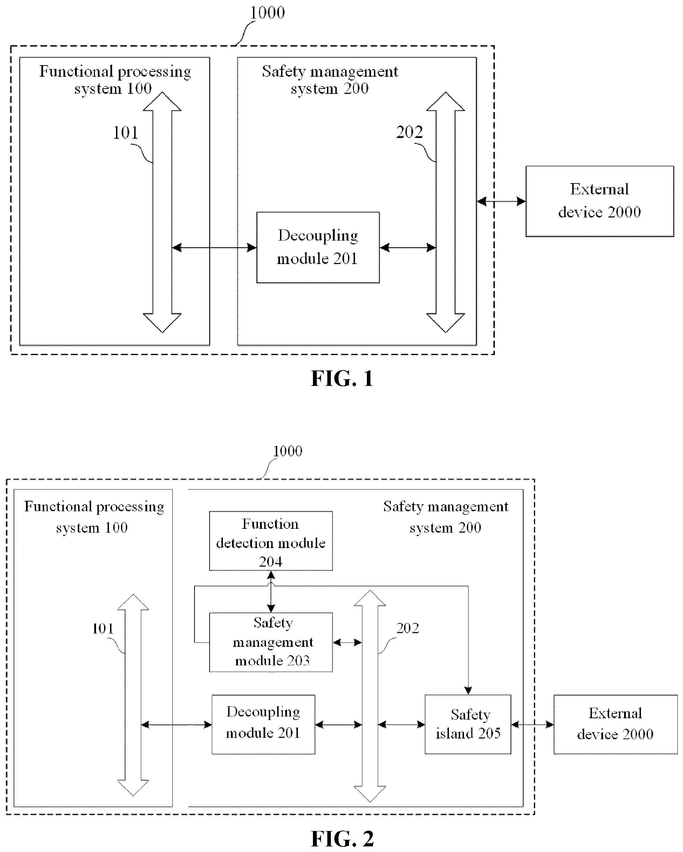

Please refer to FIG. 1, which is a structural schematic diagram of a LiDAR chip provided by an embodiment of the present application. As shown in FIG. 1, the LiDAR chip 1000 includes a functional processing system 100 and a safety management system 200.

The functional processing system 100 is configured to implement and detect first-part functions in the LiDAR chip 1000 and output first detection results. In an embodiment, the first-part functions include the functionality of detecting target object data (e.g., the distance between the LiDAR chip and the target object's location) through lasers. The functional processing system 100 can implement this functionality based on preconfigured functional modules, while also detecting the functionality using preconfigured detecting methods and outputting corresponding first detection results.

The functional processing system 100 includes a first data bus 101. A data bus is a set of physical lines or electronic signals used for data transmission. A data bus, used broadly to refer to the bus system, typically includes three parts: an address bus, a data bus (in a narrow sense), and a control bus, which transmit addresses, data, and control signals, respectively. The first data bus 101 connects the various modules of the functional processing system 100, enabling communication and data exchange between them. The first data bus 101 also connects to the safety management system 200 to facilitate communication and data exchange between the modules of the functional processing system 100 and those of the safety management system 200.

The safety management system 200 is configured to detect second-part functions in the LiDAR chip 1000 and obtain second detection results. In an embodiment, the second-part functions include power supply functionality. The safety management system 200 can detect this functionality using preconfigured detection methods (e.g., detecting whether voltage is too high or too low) and output corresponding second detection results. The safety management system 200 is also configured to acquire the first detection results.

The safety management system 200 is further configured to determine whether anomalies exist in the first-part functions based on the first detection results and determine whether anomalies exist in the second-part functions based on the second detection results. Here, anomalies in the first-part functions correspond to partial or complete anomalies in the first-part functions, and anomalies in the second-part functions correspond to partial or complete anomalies in the second-part functions.

When the safety management system 200 determines that anomalies exist in the first-part functions and/or the second-part functions, it outputs anomaly signals to an external device 2000 based on at least some of the anomalous functions. The safety management system 200 may output corresponding anomaly signals to the external device 2000 based on all anomalous functions or output anomaly signals based on a subset of anomalous functions while handling the remaining subset internally. In an embodiment, if the safety management system 200 identifies three anomalous functions, it outputs anomaly signals to the external device 2000 based on all three. In another embodiment, if the safety management system 200 identifies three anomalous functions, it outputs signals for two of them to the external device 2000 and resolves the third internally.

In some embodiments, when the LiDAR chip 1000 is installed in an electrical device (e.g., electric vehicles, electric bicycles, electric tricycles), the external device 2000 may be a control device within the electrical device. When the external device 2000 receives anomaly signals, it can promptly take corrective actions to reduce safety risks, ensure reliable and stable operation of the electrical device, and safeguard personal safety. In an embodiment, if the electrical device is an electric vehicle, upon receiving anomaly signals, it can immediately disable autonomous driving functions to protect the lives of passengers and drivers.

The safety management system 200 includes a decoupling module 201 and a second data bus 202. The second data bus 202 connects the various modules of the safety management system 200, enabling communication and data exchange between them. The second data bus 202 also connects to the functional processing system 100 to facilitate communication and data exchange between the modules of the functional processing system 100 and those of the safety management system 200. The decoupling module 201 is positioned between the first data bus 101 and the second data bus 202 to decouple the first data bus 101 and the second data bus 202. By decoupling the two data buses, they can operate independently while transmitting data, preventing anomalies in one from affecting the other. Thus, if the first data bus 101 becomes anomalous, the second data bus 202 can remain operational.

The functional processing system 100 and the safety management system 200 operate on different power supplies and clocks. This design ensures that the safety management system 200 is a relatively independent system. When anomalies occur in the LiDAR chip (i.e., anomalies in the first-part and/or second-part functions), the independence of the safety management system 200 increases the likelihood that it remains unaffected and operational. Consequently, anomaly information can be reliably uploaded to the external device 2000, enabling timely corrective actions to reduce safety risks, ensure stable operation of the external device 2000, and effectively safeguard personal safety.

In one embodiment, as shown in FIG. 2, the safety management system 200 includes a safety management module 203, a function detection module 204, and a safety island 205.

The function detection module 204 is configured to detect the second-part functions and output second detection results to the safety management module 203. In some embodiments, the function detection module 204 is further configured to operate or cease operating under the control of the safety management module 203.

The safety management module 203 is configured to receive the first detection results and the second detection results, determine anomalous functions among the first-part functions and the second-part functions based on these results, generate one interrupt for each anomalous function to produce M interrupts for M anomalous functions, and output N interrupts among the M interrupts to the safety island 205, where M and N are integers, and M ≥ N ≥ 1. After receiving the first and second detection results, the safety management module 203 determines whether anomalies exist in the first-part functions based on the first detection results and in the second-part functions based on the second detection results. If M anomalous functions are identified, M interrupts are generated, and N of them are sent to the safety island 205.

By selecting only N interrupts from M to send to the safety island 205, the number of concurrent tasks that the safety island 205 must handle is reduced, effectively lowering its workload. This improves the performance and stability of the safety island 205 and extends its operational lifespan.

Notably, the N interrupts may be arbitrarily selected from the M interrupts or chosen based on predefined criteria. In an embodiment, the safety management module 203 is further configured to assign a priority level to each of the M interrupts and transmit the N interrupts with the highest priority levels to the safety island 205. This allows the safety management module 203 to efficiently manage all interrupts, enhance system performance and stability, ensure orderly operation according to established rules, and prioritize critical interrupts.

The safety island 205 is an ASIL-D-compliant MCU processor that serves as the safety and control core of the entire chip. It remains operational even when the functional processing system 100 fails, ensuring a high probability of uploading anomaly information to the external device 2000. ASIL-D (Automotive Safety Integrity Level D) is the highest safety integrity level defined in the ISO 26262 standard for automotive functional safety.

The safety island 205 is configured to determine the N anomalous functions corresponding to the N interrupts and output anomaly signals to the external device 2000 based on at least some of these functions. After receiving the N interrupts, the safety island 205 retrieves the N anomalous functions via the second data bus 202 from the safety management module 203. In one embodiment, if the safety island 205 determines that it cannot resolve any of the N anomalous functions, it generates anomaly signals based on all N functions and outputs them to the external device 2000. In another embodiment, if the safety island 205 identifies K unresolved anomalous functions (1 ≤ K < N) among the N, it generates anomaly signals for these K functions and handles the remaining N-K functions internally.

When generating anomaly signals, the safety island 205 may produce one signal per anomalous function or combine multiple related functions into a single signal. In an embodiment, if three interrupts are received and two corresponding functions are anomalous, the safety island 205 may generate two separate signals (for unrelated anomalies) or one consolidated signal (for related anomalies).

After resolving all N anomalous functions (including internal handling and signal transmission), the safety management module 203 may select additional interrupts from the remaining M-N to send to the safety island 205 for further resolution. For instance, if M=10 and N=3, the safety management module 203 might handle one anomaly internally, send two interrupts to the safety island 205, and later transmit additional interrupts from the remaining seven for continued processing.

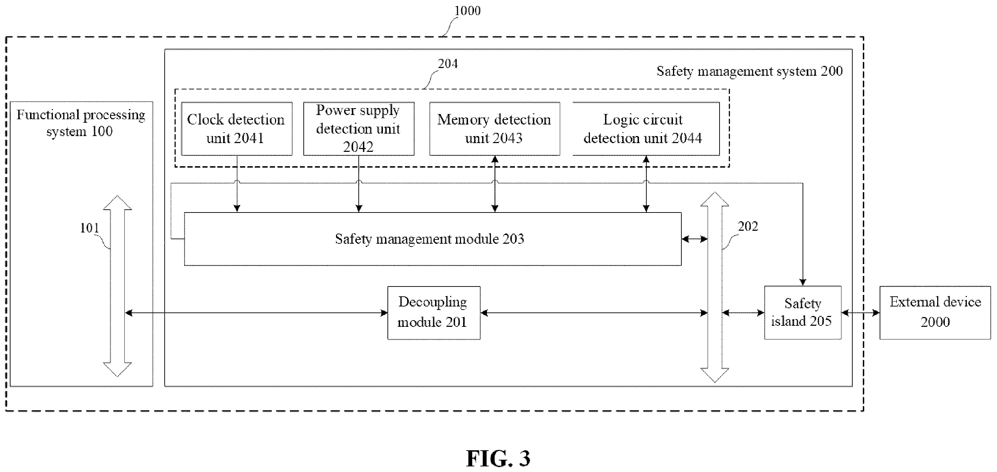

In one embodiment, as shown in FIG. 3, the function detection module 204 includes a clock detection unit 2041, a power supply detection unit 2042, a memory detection unit 2043, and a logic circuit detection unit 2044.

The clock detection unit 2041 is configured to detect all clocks of the LiDAR chip 1000 to detect abnormal clock frequencies. The second-part functions include clock functionality. Clocks are hardware devices or system components used to measure and track time, synchronize processor operations, timestamp events, schedule tasks, and perform timed operations. Clock detecting ensures the stability and reliability of the LiDAR chip 1000.

The power supply detection unit 2042 is configured to detect all power supplies of the LiDAR chip 1000 to detect overvoltage or undervoltage conditions. The second-part functions include power supply functionality. This ensures stable power delivery to all modules, preventing malfunctions or damage due to voltage fluctuations or interruptions.

The memory detection unit 2043 is configured to detect the functionality of all memories in the LiDAR chip 1000, including those in the functional processing system 100 and the safety management system 200. Memory detecting prevents data loss or corruption, enhancing the chip's operational stability and reliability.

In some embodiments, the memory detection unit 2043 is structured as an MBIST (Memory Built-In Self-Test) instruction parser and an MBIST controller.

The MBIST instruction parser is a hardware module that identifies and interprets MBIST commands. It parses MBIST test commands (e.g., start test, stop test, read results) from the safety management module 203 and issues control instructions to the MBIST controller.

The MBIST controller is a hardware module responsible for executing MBIST tests. It includes one or more MBIST engines that generate test sequences. Upon receiving control instructions, the MBIST controller drives the memory into test mode, where predefined test sequences (e.g., write/read operations with data patterns) are applied to detect memory anomalies.

In some embodiments, memory functionality is verified using predefined methods such as ECC (Error Correction Code). During memory design, ECC redundancy bits are added to the data width. During write operations, ECC encoding is performed and stored; during read operations, ECC decoding and error correction are applied to ensure data integrity.

The logic circuit detection unit 2044 is configured to detect the functionality of all logic circuits in the LiDAR chip 1000, including those in the functional processing system 100 and the safety management system 200. By detecting logic circuits, design errors or malfunctions-such as incorrect logic gate connections or timing issues-can be promptly identified, aiding in problem resolution and ensuring the correctness and reliability of circuit design.

In an embodiment, based on the structure shown in FIG. 3, the safety management module 203 is further configured to: after the LiDAR chip 1000 is powered on, control the memory detection unit 2043 and the logic circuit detection unit 2044 to operate (to test all memories and logic circuits in the LiDAR chip 1000); if no anomalies are detected in the memories or logic circuits, enable normal startup of all circuits in the LiDAR chip 1000; if anomalies are detected, disable the startup of all circuits in the LiDAR chip 1000.

By performing self-tests on memories and logic circuits immediately after power-up, the read/write functionality of memories can be verified to ensure data integrity and reliability. This also confirms correct circuit design and connections, preventing hardware-related failures that could disrupt the LiDAR chip 1000's operation.

In an embodiment, the safety management module 203 is further configured to: after all circuits in the LiDAR chip 1000 are successfully started, periodically acquire the first and second detection results at predefined intervals; and output corresponding interrupts to the safety island 205 whenever anomalies in the first-part functions and/or second-part functions are detected based on these results. The implementation of interrupt generation and transmission aligns with the earlier description of the safety management module 203 and will not be reiterated here.

The predefined interval is a duration set in advance, adjustable based on practical application scenarios. The embodiments of the present application impose no constraints on this value.

Regular detecting of the first-part and/or second-part functions enables early detection and resolution of potential anomalies, thereby reducing the risk of device failures in the LiDAR chip 1000.

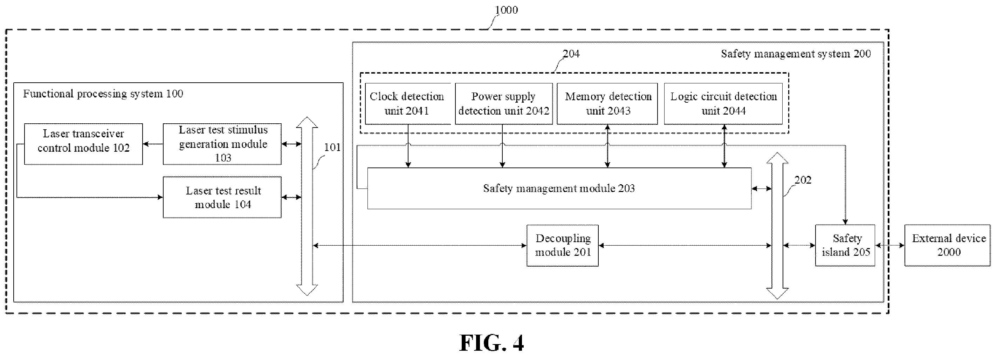

In one embodiment, as shown in FIG. 4, the functional processing system 100 includes a laser transceiver control module 102, a laser test stimulus generation module 103, and a laser test result module 104.

The laser transceiver control module 102 is configured to emit lasers toward a target object and receive echo signals reflected by the target object. These echo signals provide information about the target object. In an embodiment, the time-of-flight (ToF) between laser emission and echo reception can be used to calculate the distance between the target object and the LiDAR equipped with the LiDAR chip 1000. The laser transceiver control module 102 implements laser transmission and reception functionalities, meaning that the first-part functions include laser emission and reception capabilities.

The laser test stimulus generation module 103 is configured to generate test stimuli for the laser transceiver control module 102, placing it in a test mode. Laser test stimuli refer to excitation signals applied during testing to trigger responses from the laser transceiver control module 102 for analysis.

In some embodiments, test stimuli (e.g., laser test stimuli and point cloud processing test stimuli) can be generated during the blanking period of the LiDAR using the LiDAR chip 1000. In an embodiment, in LiDAR systems employing MEMS galvanometers for scanning, each scanning cycle starts from the top-left corner and ends at the bottom-left corner. After each cycle, the galvanometer returns to the starting position (retrace), during which no detection lasers are emitted or received-this retrace period is the blanking interval.

In other embodiments, test stimuli may be generated at fixed intervals (e.g., every 100 detection cycles). During testing, the LiDAR suspends normal laser emission and reception.

The laser test result module 104 is configured to acquire and output test results from the laser transceiver control module 102 during test mode. The first detection results include these test results. The laser test stimulus generation module 103 and laser test result module 104 collectively enable the detecting of laser transmission and reception functionalities. In some implementations, predefined verification methods-such as checksum encoding-are used to validate data transmitted during test mode.

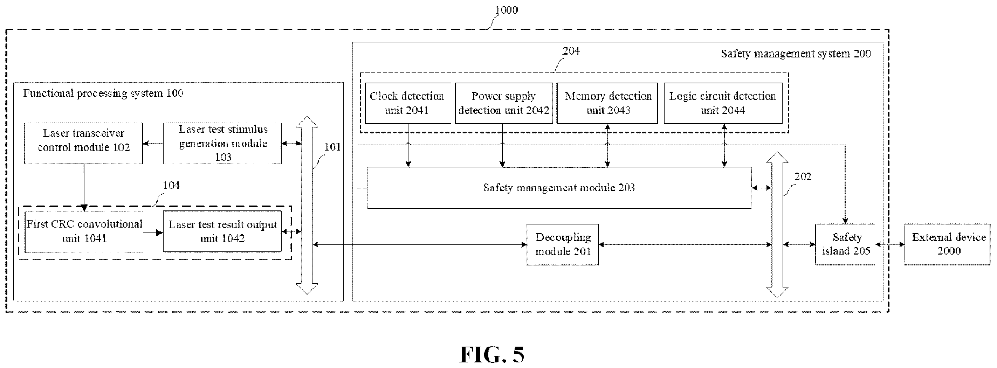

In an embodiment, as shown in FIG. 5, the laser test result module 104 includes a first CRC convolutional unit 1041 and a laser test result output unit 1042. The first CRC convolutional unit 1041 performs calculations on data transmitted by the laser transceiver control module 102 during test mode, generating a checksum that is appended to the data and sent to the laser test result output unit 1042. Upon receiving the data, the output unit performs the same calculation and compares it with the appended checksum. The comparison result (i.e., the test result from the laser transceiver control module 102 in test mode) is transmitted to the safety management module 203 via the first data bus 101.

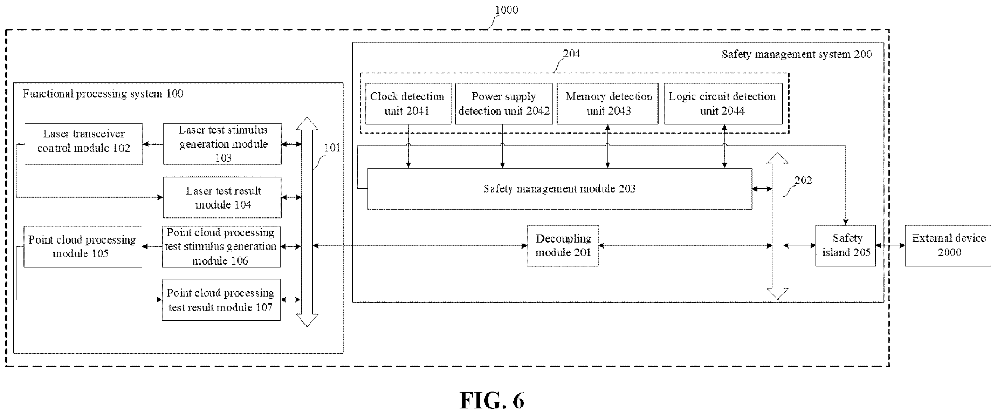

In one embodiment, as shown in FIG. 6, the functional processing system also includes a point cloud processing module 105, a point cloud processing test stimulus generation module 106, and a point cloud processing test result module 107. FIG. 6 illustrates an extended structure based on FIG. 4, with the addition of these modules.

The point cloud processing module 105 is configured to process point cloud data derived from echo signals reflected by the target object. Information about detected points is extracted from the echoes to generate point cloud data, which is then used to identify the target object. In an embodiment, when the LiDAR chip 1000 is installed in an electric vehicle, the vehicle relies on processed point cloud data to detect obstacles during autonomous driving. The point cloud processing module 105 implements point cloud data processing capabilities, meaning that the first-part functions include point cloud data processing.

The point cloud processing test stimulus generation module 106 is configured to generate test stimuli for the point cloud processing module 105, placing it in test mode. These stimuli are excitation signals applied during testing to trigger responses for analysis.

The point cloud processing test result module 107 is configured to acquire and output test results from the point cloud processing module 105 during test mode. The first detection results include these test results. The point cloud processing test stimulus generation module 106 and point cloud processing test result module 107 enable detecting of point cloud data processing functionality. Predefined verification methods, such as checksum encoding, are used to validate data transmitted during test mode.

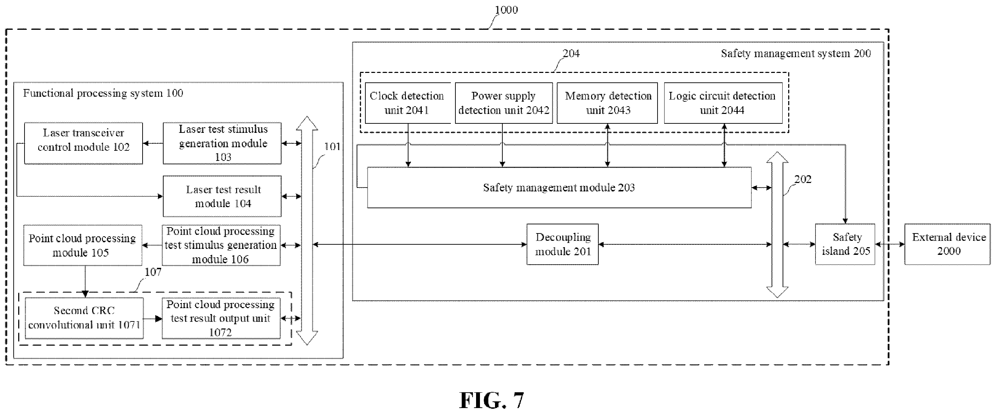

In an embodiment, as shown in FIG. 7, the point cloud processing test result module 107 includes a second CRC convolutional unit 1071 and a point cloud processing test result output unit 1072. The point cloud processing test stimulus generation module 106 generates test stimuli corresponding to extreme operational scenarios, such as Corner Cases (e.g., rare or critical situations like traffic accidents, severe weather, or complex road conditions). These stimuli are input to the point cloud processing module 105, which processes the data and outputs results. The second CRC convolutional unit 1071 performs CRC convolutional calculations on the processed point cloud data, generating a convolutional code that is appended to the data and sent to the point cloud processing test result output unit 1072. The output unit repeats the calculation, compares it with the appended code, and transmits the comparison result (i.e., the test result from the point cloud processing module 105 in test mode) to the safety management module 203 via the first data bus 101.

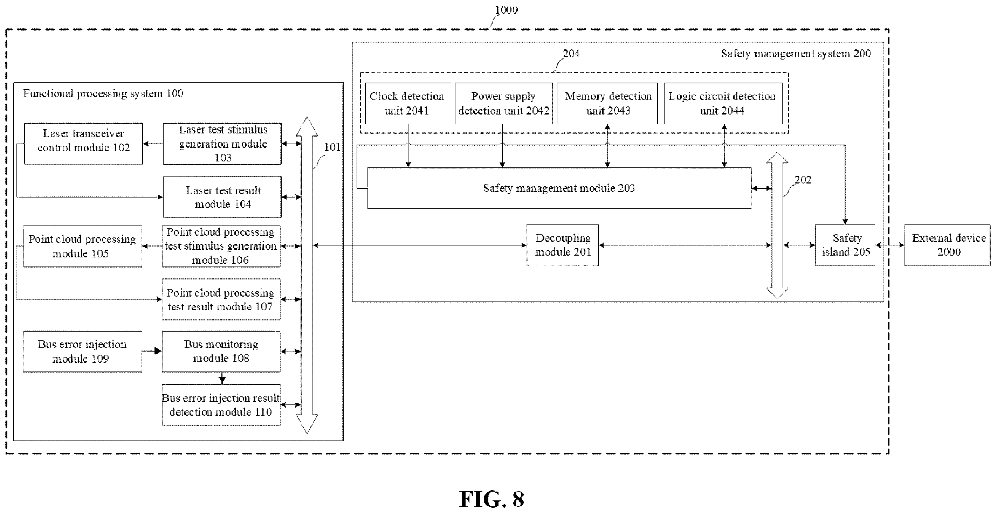

In one embodiment, as shown in FIG. 8, the functional processing system 100 further includes a bus detecting module 108, a bus error injection module 109, and a bus error injection result detection module 110. FIG. 8 exemplarily illustrates a structure built upon FIG. 6 by adding the bus detecting module 108, bus error injection module 109, and bus error injection result detection module 110.

The bus detecting module 108 is configured to detect whether data transmitted over the first data bus 101 is abnormal. Detecting the data transmission on the first data bus 101 helps oversee the operational status of the LiDAR chip 1000, enhances its stability, safety, and performance, and provides critical references for optimization and troubleshooting. The bus detecting module 108 enables the functionality of detecting data transmission on the first data bus 101, meaning the first-part functions include detecting data transmission on the first data bus 101.

In some embodiments, the first data bus 101 is a channel for data transmission and may be an AXI (Advanced eXtensible Interface) bus, AHB (Advanced High-performance Bus) bus, SPI (Serial Peripheral Interface) bus, etc.

Taking the first data bus 101 as an example for connecting a master device and a slave device: the master device outputs first data and transmits it to the slave device via the bus, while the slave device outputs second data and transmits it to the master device via the bus. The bus detecting module 108 is configured to receive the first data and second data, set check data, and output processing results for the first and second data based on the first data, second data, and check data. The first data received by the bus detecting module 108 includes both the first data on the output side of the master device and the first data on the input side of the slave device. The second data received by the bus detecting module 108 includes both the second data on the output side of the slave device and the second data on the input side of the master device. The method for setting check data can be configured according to practical application scenarios. In an embodiment, check data may be set via ECC (Error Correction Code) encoding, parity check encoding, or CRC (Cyclic Redundancy Check) encoding.

In an embodiment, on one hand, the bus detecting module 108 receives the first data from the output side of the master device, encodes it based on a first encoding type (e.g., ECC, parity check, or CRC), and outputs a first encoded result. The bus detecting module 108 also receives the first data from the input side of the slave device, encodes it based on the same first encoding type, and outputs a second encoded result. If the first and second encoded results match, the first data is deemed normal; if they differ, the first data is deemed abnormal. On the other hand, the bus detecting module 108 receives the second data from the output side of the slave device, encodes it based on the first encoding type, and outputs a third encoded result. It also receives the second data from the input side of the master device, encodes it similarly, and outputs a fourth encoded result. If the third and fourth encoded results match, the second data is normal; otherwise, it is abnormal. In summary, the bus detecting module 108 detects the first and second data on the first data bus 101, determines their status, reduces risks and losses caused by data errors, and improves data reliability and credibility.

In the above embodiment, the first and second data are encoded using the same first encoding type. In other embodiments, different encoding types may be applied to different data for similar anomaly detection. In an embodiment, the first data includes a first part of data and a second part of data. The first part of data is encoded based on a first encoding type, and the second part of data is encoded based on a second encoding type. Using a method similar to the aforementioned embodiment, it is determined separately whether the first part of data and the second part of data are abnormal. Here, the first encoding type differs from the second encoding type. For instance, the first encoding type may be ECC encoding, and the second encoding type may be parity check encoding.

The bus error injection module 109 is configured to generate bus error information and inject it into the bus detecting module 108 to test whether the module functions properly. The bus error information simulates abnormal data transmission scenarios on the first data bus 101. For instance, the error information may replicate faulty data during abnormal transmission.

The bus error injection result detection module 110 is configured to acquire and output detection results from the bus error injection into the bus detecting module 108. The first detection results include these injection results. Based on these results, the functionality of the bus detecting module 108 can be validated. This ensures reliable detecting of the first data bus 101 only when the bus detecting module 108 operates normally.

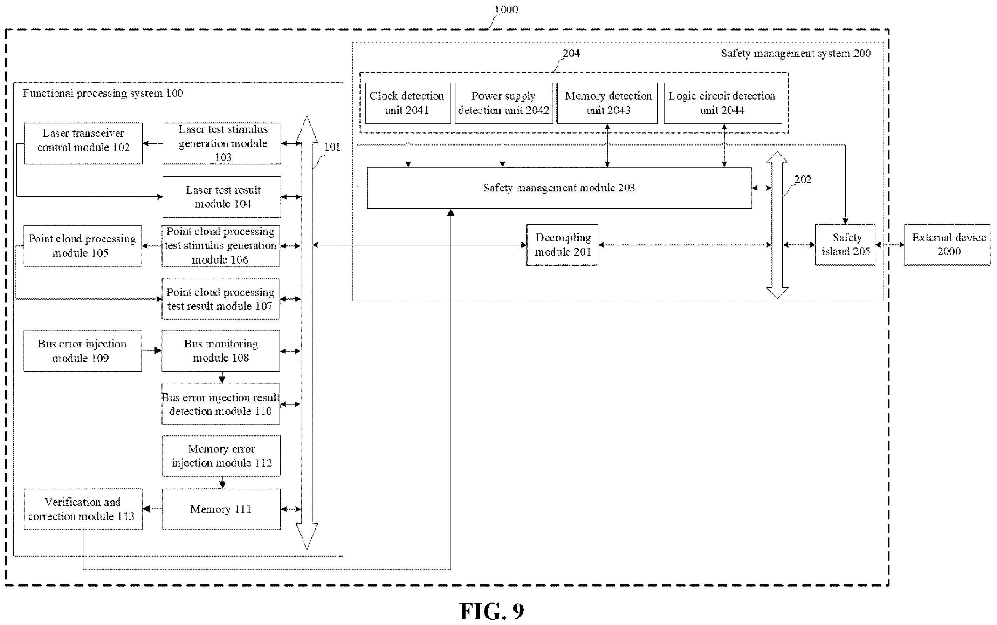

In one embodiment, as shown in FIG. 9, the functional processing system 100 further includes a memory 111, a memory error injection module 112, and a verification and correction module 113.

The memory error injection module 112 is configured to generate memory error information and inject it into the stored data of the memory 111. This error information simulates scenarios where bits in the memory 111 exhibit fixed or random errors. In an embodiment, the error information might represent a stuck-at fault in any bit of the memory 111.

The verification and correction module 113 is configured to perform verification and error correction when memory error information is injected into the stored data. It sends verification and correction results to the safety management module 203, with the first detection results including these outcomes. In an embodiment, the verification and correction module 113 is an ECC verification module. The ECC module adds redundant information during error injection to verify stored data and output verification results, while also correcting data errors to some extent and outputting correction results.

It should be noted that the memory detection unit 2043 detects both the memory 111 in the functional processing system 100 and the memory in the safety management system 200. After all circuits in the LiDAR chip 1000 are activated, the memory detection unit 2043 periodically checks the read/write functionality of the memory 111. In one embodiment, since the safety management system's memory primarily stores configuration parameters (rarely modified) and the functional processing system's memory 111 handles high-frequency read/write operations (e.g., laser transmission/reception and point cloud processing), the detection frequency for the safety management system's memory is set lower than that for the memory 111 to optimize efficiency.

It is important to clarify that the hardware structures of the LiDAR chip 1000 shown in FIGs. 2-9 are merely examples. The LiDAR chip 1000 may include more or fewer components than illustrated, combine two or more components, or adopt different configurations. The depicted components may be implemented in hardware, software, or a combination thereof, including one or more signal processing units and/or application-specific integrated circuits.

In some embodiments, the interrupt-related functions executed by the safety management module 203 (as shown in FIGs. 2-9) may be implemented by a separate module to reduce the workload on the safety management module 203 and improve efficiency.

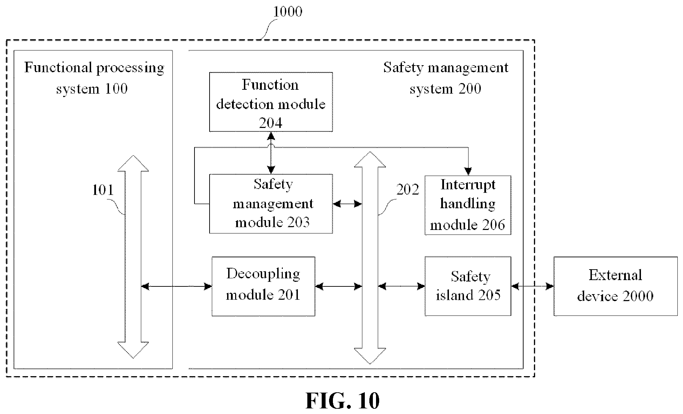

Taking the implementation of interrupt-related functions in the safety management module 203 (FIG. 2) by a standalone module as an example, as shown in FIG. 10, the safety management system 200 further includes an interrupt handling module 206. In this configuration, the safety management module 203 is configured to receive the first and second detection results, determine anomalous functions among the first-part and second-part functions based on these results, generate M interrupts (one per anomaly), and send the M interrupts to the interrupt handling module 206. The interrupt handling module 206 is configured to process the M interrupts based on predefined logic (e.g., priority levels as in earlier embodiments) and output N interrupts among the M to the safety island 205. Implementation details align with the earlier description of the safety management module 203 in FIG. 2 and will not be repeated here.

Embodiments of present application also provide a LiDAR device, which includes a housing and the LiDAR chip 1000 described in any of the embodiments of present application, with the LiDAR chip 1000 housed within the housing.

The above descriptions are merely embodiments of present application and do not limit the patent scope of the application. Any equivalent structural or process transformations derived from the content of present application's specification and drawings, whether directly or indirectly applied in other related technical fields, shall fall within the protection scope of present application's patents.

The above embodiments are intended to illustrate the technical solutions of present application, not to limit them. Under the principles of present application, technical features from these embodiments or different embodiments may be combined, and steps may be executed in any order. Those skilled in the art should understand that they may modify the technical solutions described in the preceding embodiments or equivalently substitute some technical features, provided such modifications or substitutions do not depart from the essence of the technical solutions covered by the embodiments of present application.

## Claims

1. A LiDAR chip, comprising:
a functional processing system, configured to implement and detect first-part functions, and output first detection results, wherein the functional processing system comprises a first data bus; and
a safety management system, configured to: detect second-part functions to obtain second detection results, acquire the first detection results, and, when determining that the first-part functions and/or the second-part functions exhibit anomalies based on the first detection results and the second detection results, output anomaly signals to an external device based on at least part of the anomalous functions,
wherein the safety management system comprises a decoupling module and a second data bus, the decoupling module being arranged between the first data bus and the second data bus to decouple the first data bus and the second data bus, and wherein the functional processing system and the safety management system operate using different power supplies and clocks.

2. The LiDAR chip according to claim 1, wherein the safety management system comprises a function detection module, a safety management module, and a safety island;
the function detection module is configured to detect the second-part functions and output the second detection results to the safety management module;
the safety management module is configured to receive the first detection results and the second detection results, determine anomalous functions among the first-part functions and the second-part functions based on the first detection results and the second detection results, generate M interrupts respectively corresponding to the M anomalous functions, and output N of the M interrupts to the safety island, where M and N are integers and M≥N≥1; and
the safety island is configured to determine N anomalous functions corresponding to the N interrupts and output anomaly signals to the external device based on at least part of the N anomalous functions.

3. The LiDAR chip according to claim 2, wherein the function detection module comprises:
a clock detection unit, configured to detect all clocks of the LiDAR chip;
a power supply detection unit, configured to detect all power supplies of the LiDAR chip;
a memory detection unit, configured to detect functions of all memories of the LiDAR chip; and
a logic circuit detection unit, configured to detect functions of all logic circuits of the LiDAR chip.

4. The LiDAR chip according to claim 3, wherein the safety management module is further configured to:
after the LiDAR chip is powered on, control the memory detection unit and the logic circuit detection unit to operate;
if it is determined that all memories and logic circuits of the LiDAR chip exhibit no anomalies, control all circuits in the LiDAR chip to start normally; and
if it is determined that anomalies exist in the memories or logic circuits of the LiDAR chip, disable the startup of all circuits in the LiDAR chip.

5. The LiDAR chip according to claim 4, wherein the safety management module is further configured to:
after all circuits in the LiDAR chip have started normally, acquire the first detection results and the second detection results at preset intervals; and
output corresponding interrupts to the safety island each time anomalies in the first-part functions and/or the second-part functions are determined based on the first detection results and the second detection results.

6. The LiDAR chip according to claim 4, wherein the safety management module is further configured to assign a priority level to each of the M interrupts and transmit N interrupts with the highest priority levels to the safety island.

7. The LiDAR chip according to claim 1, wherein the functional processing system comprises:
a laser transceiver control module, configured to emit laser beams to a target object and receive echo signals reflected by the target object;
a laser test stimulus generation module, configured to generate laser test excitations and send them to the laser transceiver control module, causing the laser transceiver control module to operate in a test state; and
a laser test result module, configured to acquire and output test results of the laser transceiver control module operating in the test state, wherein the first detection results include the test results of the laser transceiver control module operating in the test state.

8. The LiDAR chip according to claim 1, wherein the functional processing system comprises:
a point cloud processing module, configured to process point cloud data, wherein the point cloud data is obtained from echo signals reflected by a target object after laser beams are emitted to the target object;
a point cloud processing test stimulus generation module, configured to generate point cloud processing test excitations and send them to the point cloud processing module, causing the point cloud processing module to operate in a test state; and
a point cloud processing test result module, configured to acquire and output test results of the point cloud processing module operating in the test state, wherein the first detection results include the test results of the point cloud processing module operating in the test state.

9. The LiDAR chip according to claim 1, wherein the functional processing system comprises:
a bus detecting module, configured to detect whether data transmission on the first data bus is anomalous;
a bus error injection module, configured to generate bus error information and inject the bus error information into the bus detecting module, wherein the bus error information is obtained by simulating anomalous data transmission on the first data bus; and
a bus error injection result detection module, configured to acquire and output detection results of the bus error information injected into the bus detecting module, wherein the first detection results include the detection results of the bus error information injected into the bus detecting module.

10. The LiDAR chip according to claim 1, wherein the functional processing system comprises:
a memory;
a memory error injection module, configured to generate memory error information and inject the memory error information into data stored on the memory; and
a verification and error correction module, configured to perform verification and error correction when the memory error information is injected into the stored data, and transmit verification results and error correction results to the safety management system, wherein the first detection results comprise the verification results and the error correction results.

11. A LiDAR, comprising a housing and the LiDAR chip according to any one of claims 1 to 10, wherein the LiDAR chip is arranged inside the housing.
